Europäisches Patentamt

(19) European Patent Office

Office européen des brevets

(11) Publication number: **0 001 511**
**A1**

(12) **EUROPEAN PATENT APPLICATION**

(21) Application number: **78300465.8**

(22) Date of filing: **05.10.78**

(51) Int. Cl.²: **H 01 C 7/04,** H 01 C 7/00,
G 01 N 27/12, G 01 N 27/16

(30) Priority: **05.10.77 US 839705**

(43) Date of publication of application: **18.04.79**
**Bulletin 79/8**

(84) Designated Contracting States: **BE DE FR GB NL SE**

(71) Applicant: **FORD MOTOR COMPANY LIMITED, Eagle
Way, Brentwood Essex CM13 3BW (GB)**
(84) Designated Contracting States: **GB**

(71) Applicant: **Ford - Werke Aktiengesellschaft,
Ottoplatz 2 Postfach 21 03 69, D-5000 Köln 21 (DE)**
(84) Designated Contracting States: **DE**

(71) Applicant: **FORD FRANCE SOCIETE ANONYME, 344
Avenue Napoleon Bonaparte B.P. 307, F-92506 Ruell
Malmaison (FR)**
(84) Designated Contracting States: **FR**

(71) Applicant: **FORD MOTOR COMPANY, Dearborn Wayne,
Michigan (US)**
(84) Designated Contracting States: **BE NL SE**

(72) Inventor: **Heiney, Elmer Thomas, 13108, Ludlow,
Huntington Woods, Michigan 48070 (US)**
Inventor: **Merchant, Stanley Richard, 30001 Leona
Street, Garden City Michigan 48135 (US)**

(74) Representative: **Drakeford, Robert William et al, 15/448
Research & Engineering Centre, Laindon Basildon
Essex SS15 6EE (GB)**

(54) **Thermistor and method of fabrication.**

(57) A high temperature thermistor (24) is fabricated from titanium dioxide ceramic forming material which is processed to produce a sensor body (58) having a pair of electrical leads (34, 36) in spaced apart relation embedded within the body and with the body having a porosity compatible with use as a rapid response time partial pressure of oxygen responsive sensor. The sensor body (58) is then coated with a layer (60) of oxygen impervious barrier or maskant material. This material masks the sensor (58) from any changes in the partial pressure of oxygen of its environment and permits the sensor to respond electrically exclusively to changes in the temperature of its environment. At elevated temperatures above about 700°F the encapsulated titania ceramic material behaves as a semiconductor having a resistance which is responsive to the temperature of the sensor element (58). The thermistor (24) is fabricated by processing titania powder which includes a substantial majority of rutile phase material.

## DESCRIPTION

This invention relates to thermistors.

It has been determined that the operation of a conventional automotive internal combustion engine produces substantially quantities of deleterious gaseous combustion by-products. The principal pollutants so produced are hydrocarbons, carbon monoxide and varies oxides of nitrogen. Extensive investigation into the combustion process, examination of alternative combustion processes and detailed studies of exhuast gas treatment devices have led to the conclusion that the use of a catalytic converter within the exhaust system of an internal combustion engine provides a practical and effective technique for substantially reducing the emission of the deleterious gaseous combustion by-products into the atmosphere.

A catalytic exhaust gas treatment device or converter which is capable of substantially simultaneously converting all three of the aforementioned principal pollutants into water, carbon dioxide and gaseous nitrogen is referred to as a "three-way catalyst". However, for the known three-way catalyst devices to be most effective, the gaseous by-products introduced into the converter must be the by-products of combustion of a substantially stoichiometric air/fuel ratio. Such three-way catalyst devices are said to have a very narrow "window" of air/fuel ratios at which the device is most efficiently operative on the three principal pollutants. By way of example, if $\lambda$ is the air/fuel ratio normalized to stoichiometry, the window may extend from about $0.99\lambda$ to about $1.01\lambda$. Such a three-way catalyst device is described, for example, in United States Letters Patent 3,895,093 issued to Weidenbach et al. on July 15, 1975, assigned to Kali Chemie Aktiengesellschaft and titled "Catalytic Removal of Carbon Monoxide Unburned Hydrocarbon and Nitrogen Oxide from Automotive Exhaust Gas". For air/fuel ratios of the combustion mixture on either side of the window, one or two of the principal pollutants will be converted in only very small percentage efficiencies. Within the window, the three principal pollutants will be converted at very high efficiencies approaching 90% in some cases. In view of the narrowness of the catalytic converter window it has been determined that the associated combustion source must be operated with a combustible mixture as close as possible to stoichiometry.

The most satisfactory technique for assuring continuous or substantially continuous operation at the optimum air/fuel ratio is through the utilization of an appropriate feedback mechanism. In implementing suitable feedback control systems it has been proposed to employ sensors responsive to the chemistry of the exhaust gases, that is, the hot gaseous combustion by-products, in order to control the precise air content and/or fuel content of the air/fuel mixture being provided to the combustion source. One type of electrochemical exhaust gas sensor employs a ceramic material which demonstrates a predictable electrical resistance change when the partial pressure of oxygen of its environment changes. An example of such a material is titania (titanium dioxide having a general formula $TiO_2$). Such sensors may be fabricated generally in accordance with the teachings of United States Letters Patent 3,886,785 issued to Stadler et al., entitled "Gas Sensor and Method of Manufacture". Tests of such devices have shown that at elevated and substantially constant temperatures the devices will demonstrate a virtual step change in resistance for rich-to-lean and lean-to-rich excursions of the air/fuel ratio of the combustion mixture producing the exhaust gas environment of the device.

A principal difficulty which has been encountered with such variably resistance devices resides in the fact that such devices demonstrate a measurable resistance change which is also a function of change of the temperature of the ceramic material. For example, a temperature change of about $500^\circ$F produces a measurable resistance change on the order of magnitude of a sensed rich-to-lean or lean-to-rich air/fuel mixture change. Such a temperature variation may be encountered, depending of course to some extent on the location of placement of the sensor within an exhaust system, during acceleration of the associated engine from idle speed to highway speeds. Heretofore, exhaust gas sensors which employed a variable resistance sensor ceramic have required that the temperature of the material be relatively closely controlled for reliable use in a feedback system intended to provide an internal combustion engine with very precise air/fuel ratio control.

Temperature control of the associated sensor has proved to be an expensive and not wholly satisfactory technique for adapting such variable resistance sensor ceramic materials to air/fuel ratio feedback control systems in automotive internal combustion engines. In order to overcome the difficulties encountered, it has been suggested to combine a thermistor in an electrical series circuit with the variable resistance exhaust gas sensor and to operate the electrical series circuit as a voltage divider network deriving a useful voltage signal from the junction between the thermistor and the variable resistive gas sensor element. However, known thermistors are not capable of operating within the exhaust gas environment of a combustion source. To operate within such an environment, the thermistor must be capable of withstanding temperatures in the range of from 700°F to 1500°F for extended periods of time and also be capable of tolerating the adverse chemical environment of an automotive engine exhaust system.

According to the present invention, there is provided a thermistor comprising a body of ceramic material; two electrical leads embedded in mutually noncontacting relation in said body, said ceramic material having an electrical resistance which varies with temperature and with partial pressure of oxygen at elevated temperatures characterised in that the body of ceramic material is substantially completely encapsulated in a coating of oxygen-impervious material.

In analyzing the reason why a partial pressure of oxygen responsive ceramic material such as titania also demonstrates a measurable resistance change in the presence of variation in temperature, it was determined that the ceramic material functions as a composite variable resistor having a resistance variation component which is responsive to changes in partial pressure of oxygen and a further resistance component which is responsive to changes in temperature. Since, according to our determination, the ceramic material functions as a composite variable resistor, we have determined that a suitable thermistor may be fabricated provided the oxygen sensitivity of the ceramic material can be eliminated. We have determined that oxygen sensitivity can be eliminated by encapsulating a porous titania partial pressure of oxygen responsive sensor in a material which is oxygen impervious and which is also preferably relatively compatible with the titania in terms of thermal expansion match and nonreactivity. Both glass and ceramic materials generally offer the best source of encapsulant. By encapsulating the titania partial pressure of oxygen responsive sensor in a material which comprises an oxygen barrier or maskant, the titania sensor so encapsulated will be exposed to an essentially constant partial pressure of oxygen in its environment and any electrical variation can be attributed solely to the influence of change in temperature of the thermistor. The present invention thus provides a titania thermistor comprised of porous titania ceramic material which has been processed to form a partial pressure of oxygen responsive sensor but which is encapsulated in oxygen bearer mask material.

A preferred embodiment of the invention will now be described, by way of example only, with reference to the drawings in which:-

Figure 1 illustrates an exhaust gas sensor construction incorporating a thermistor according to the present invention.

Figure 2 illustrates, in an exploded view, the exhaust gas sensor according to Figure 1.

Figure 3 illustrates the electrical series connection of the partial pressure of oxygen responsive ceramic sensor member with a thermistor member.

Figure 4 illustrates an enlarged sectional view of a thermistor fabricated according to the present invention and illustrating the encapsulant according to the present invention.

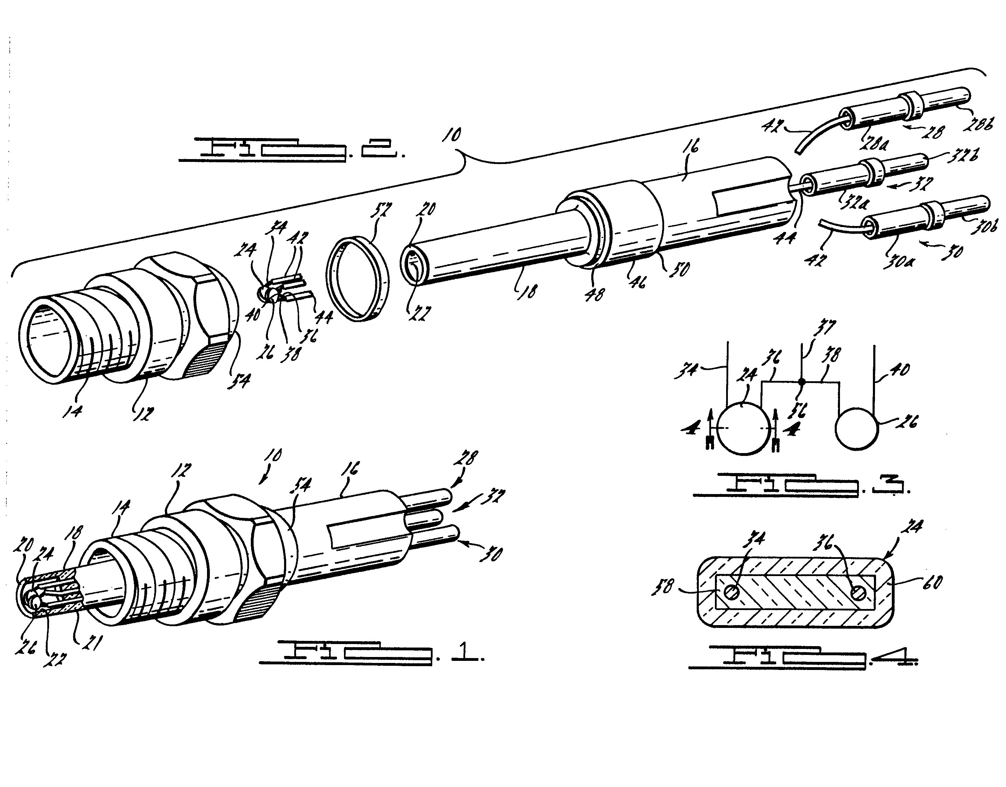

Referring now to the drawing wherein like numerals designate like structure throughout the various views thereof, an exhaust gas sensor 10 is shown in Figure 1. Exhaust gas sensor 10 is of utility, for example, as the partial pressure of oxygen responsive element insertable into the exhaust system of an internal combustion engine or a furnace for monitoring the partial pressure of oxygen of the hot gaseous combustion by-products produced thereby in order to generate a signal indicative of the quality of the combustion process. In particular, the equivalence ratio, $\lambda$, of the combustion mixture being provided to the engine or furnace may be determined by analysis of the partial pressure of oxygen within the exhaust gases.

With reference now to Figures 1 and 2, and particularly to Figure 2, an exhaust gas sensor 10 incorporating the present invention is illustrated and one possible method of assembly is described. Exhaust gas sensor 10 is provided with a housing means 12 which is threaded as at 14 for engagement with a suitably threaded aperture provided therefor within the exhaust gas conduit, not shown, of the combustion source. Ceramic insulator member 16 extends through housing means 12 and includes a forwardly projecting sensor support portion 18. Sensor support portion 18 includes forwardly projecting collar 20 which defines a well or cavity 22. Forwardly projecting portion 18 is broken away at 21 in Figure 1 for illustrative purposes. The sensor 10 includes a pair of ceramic sensor elements or members 24, 26 received within well 22. Three electrical terminal members 28, 30, 32 extend rearwardly from ceramic insulator member 16. Electrical terminal members 28, 30, 32 are adapted for receipt of suitable mating connectors, not shown, to electrically communicate exhaust gas sensor 10 with associated utilization electrical or electronic circuitry, not shown.

The insert portions 28a, 30a, 32a of each of the electrical terminal members 28, 30, 32 may be cemented into position within the rear portion of ceramic insulator member 16. The preferred cement is a catalytic agent, low temperature curable cement which cures to a high density. Such a cement may be, for example, Sauereisen #31. The terminal members 28, 30 and 32 are arranged to project an electrical contact portion 28b, 30b and 32b of each terminal member 28, 30 and 32 rearwardly from the rear face of ceramic insulator member 16.

The ceramic sensor elements 24, 26 comprise a partial pressure of oxygen responsive ceramic such as titania, for example sensor element 26, and a temperature compensating thermistor according to the present invention, for example sensor element 24. As used herein, the term thermistor refers to an electronic device which has an electrical parameter or property, such as its electrical resistance, which varies rapidly and predictably with the temperature of the device and which parameter or property does not vary in response to changes in partial pressure of oxygen of the environment of the device.

The thermistor element according to the present invention, ceramic sensor element 24, is connected electrically in series with the partial pressure of oxygen responsive element, sensor element 26, in order to compensate for any tendency of the partial pressure of oxygen responsive element 26 to change its electrical resistance in response to temperature variation. The series connected ceramic sensor element 24, 26 are arranged to be exposed to substantially the same exhaust gas environment and are arranged to define an electrical voltage divider network wherein the desired output signal is derived from the circuit junction between the ceramic sensor elements, i.e., the junction of the thermistor element with the partial pressure of oxygen responsive sensor element.

Each ceramic sensor element 24, 26 is provided with a pair of electrical leads 34, 36, 38 and 40. Electrical leads 34 and 40 are provided with individual insulating sleeve members 42. The electrical leads 36, 38 are shown being provided with a further insulating sleeve 44. Insulating sleeve members 42, 42 with their interiorly received electrical leads 34, 36, 38 and 40 are threaded through longitudinally extending bores or passages within, and which extend completely through ceramic insulator member 16 from the bottom of well or cavity 22 to the rear face of ceramic insulator member 16. Electrical lead 34 and its associated insulating sleeve 42 are inserted into the insert portion 28a of electrical terminal member 28. The electrical lead 34 is electrically united with the electrical contact portion 28b of terminal member 28. Similarly, electrical lead 40 and its associated insulator member 42 are inserted into the insert portion 30a of second electrical terminal member 30. The electrical lead 40 is electrically united with electrical contact portion 30b of terminal member 30. The conductor formed by sensor leads 36, 38 and the associated insulator sleeve member 44 are similarly inserted into the insert portion 32a of electrical terminal 32 and the conductive portion thereof is electrically united with the electrical contact portion 32b of terminal member 32.

The ceramic sensor elements 24, 26 are situated within the well or cavity 22 and are shown to be supported by their associated electrical leads 34, 36, 38 and 40. Projecting collar 20 thus may be operative upon insertion of the exhaust gas sensor 10 into an exhaust gas system to shield the ceramic sensor elements 24, 26 from impact by any solid particles which may be dislodged from the interior surface of the exhaust gas conduit. Collar 20 also protects the electrical leads 34, 36, 38 40 from flexure induced by pressure and exhaust gas flow fluctuations within the exhaust gas system. Collar 20 further protects the ceramic sensor elements 24, 26 and their electrical leads 34, 36, 38 and 40 from possible damage during assembly and from handling damage prior to or during installation into an exhaust gas system.

Ceramic insulator member 16 is provided with a centrally position enlarged annular portion 46 which is provided with a seal receiving recess 48 at its forward shoulder. Enlarged annular portion 46 is provided with an abutment shoulder 50 at its rear. The forwardly projecting portion 18 of ceramic insulator member 16 is inserted through seal member 52 and seal member 52 is loosely received within recess 48. The ceramic insulator member 16 is then inserted into housing means 12. The rear portion 54 of housing means 12 is then crimped or otherwise deformed into close intimate contact with the rear shoulder 50 of the central portion 46 of ceramic insulator means 16 to compressively and sealingly confine seal member 62 between recess 48 and a suitably provided shoulder within the central portion of housing means 12. Seal member 52 is operative to define a fluid tight barrier to flow around insulator member 16 through housing means 12. Seal member 52 is operative to establish a fluid tight barrier between the interior of an exhaust gas conduit and the exterior of the exhaust gas conduit into which an exhaust gas sensor 10 has been inserted.

Referring now to Figure 3, the electrical series connection between ceramic sensor elements 24 and 26 and electrical leads 34, 36, 38 and 40 is illustrated. Electrical leads 36, 38 are electrically united, as by welding, at junction 56. A single electrical lead 37 extends from junction 56. With reference to Figures 1 and 2, electrical lead 34 communicates, for example, with terminal member 28, electrical lead 40 communicates, for example, with terminal member 30 and electrical lead 37 may extend through insulating member 44 to communicate sensor leads 36, 38 for example, with terminal member 32.

One of the ceramic sensor elements, for example sensor element 24, is a high temperature thermistor fabricated according to the present invention. The other of the sensor elements, for example sensor element 26, is a variably resistive partial pressure of oxygen responsive ceramic such as for example titania, which also demonstrates an electrical resistance variation in response to changes in its temperature. The partial pressure of oxygen responsive sensor element 26 may be formed of titania material in the manner described in issued United States Letters Patent 3,886,785, titled Gas Sensor and Method of Manufacture, issued in the name of Henry L. Stadler et al. and assigned to the assignee of this invention. The preferred form of partial pressure of oxygen responsive ceramic sensor element 26 to be used in fabricating exhaust gas sensor 10 is the improved formed described in the above noted copending patent application Serial No. _____ (our reference US-920). Preferably, the thermistor member 24 and the partial pressure of oxygen responsive member 26 are fabricated from the same metal oxide ceramic forming base material. The advantage of this feature is discussed hereinbelow.

By utilizing titania as the base material for formation of a thermistor to be used in conjunction with a titania partial pressure of oxygen responsive sensor, economies of scale in raw material purchasing and simplification of the processing steps may be achieved. Further simplification of the processing steps can be achieved if the thermistor is fabricated to demonstrate a porosity consonant with use as a partial pressure of oxygen responsive sensor and is then further processed to include an oxygen barrier or maskant encapsulant. By utilizing a titania ceramic element processed to be porous as the thermistor a further advantage is realised. At relatively high environmental temperatures, for example temperatures above about 1600$^O$F, the electrical resistance component of titania which varies as a function of temperature drops significantly. One form of titania-based thermistor which has been proposed, the densified titania form, demonstrates a lowered inherent resistance due to the increase in density. By maintaining titania porosity in the thermistor, high environmental temperatures will not cause the thermistor resistance to drop to a value which is sufficiently low that the junction voltage would go out of the range of input voltages for associated electronics intended for feedback control using single set point control logic.

The thermistor ceramic sensor element 24 according to the instant invention is formed from essentially pure titania powder. The thermistor chip member 24 may be fabricated in much the same manner as is taught in the noted patent 3,886,785 to Stadler et al. for fabrication of partial pressure of oxygen responsive ceramic sensor elements with one principal difference. After a ceramic wafer has been formed including the provision of two extending electrical leads and having the desired porosity, an additional step is performed on the resulting element to form the thermistor according to our invention. This additional step comprises encapsulating the ceramic element in an oxygen barrier or maskant material selected to be thermally, chemically, and electrically compatible with the titania material. Such an encapsulant can be selected from the general classes of materials described as glasses and ceramics. An example of a suitable glass is Kimble glass ES-1 which is a borosilicate glass. An example of a suitable ceramic is Sauereisen # 8 encapsulant. In selecting a suitable glass or ceramic encapsulant, the expected operating range of temperatures must be taken into consideration along with the electrical, chemical and thermal properties of the contemplated encapsulant.

The preferred method of fabricating the thermistor chip member involves the preparation of a substantially pure titania powder. As titania has two phases, the anatase phase and the rutile phase, and the rutile phase is the high temperature stable phase, the titania powder could be comprised of a substantial majority of rutile phase material. In order to convert anatase phase material to rutile phase material, the material may be calcined, for example for two hours at 2100$^{o}$F, and then ball milled to produce powder having small particle sizes. The majority of the powder so produced will be rutile phase material. Calcining also improves the purity of the powder by volatilizing any volatilizable impurities. Consonant with processing to achieve a partial pressure of oxygen responsive device, the powder should have 100% of the particles smaller in size than 20 microns and should have a substantial majority of the powder with the particle size smaller than about 10 microns. The processed powders may thereafter be mixed, for example in a ball mill, with an organic binder solution to form a slurry.

The slurry may be cast, that is, formed onto a tape or sheet of material such as cellulose acetate or polytetrafluoroethylene (PTFE), after which the slurry may be air dried, to form a sheet or tape of material. Suitably sized and shaped sensor element wafers of the air dried material may then be cut from the tape for further processing. A pair of lead wires 34, 36 may be inserted into the sensor element at this stage and the sensor element may thereafter be sintered to a pyrometric cone equivalent number 9.

The ceramic element, which at this stage may be either a partial pressure of oxygen responsive element or a thermistor, is then coated with a slurry of powdered glass and water and is heated to a temperature of 1900$^{o}$F for a period of time of about 15 minutes in order to form the glass coating and establish the element as a thermistor. The glass encapsulates the chip, masking it from any chemical or electrochemical interaction with its environmental atmosphere making it insensitive to changes in the oxygen partial pressure of the environmental atmosphere.

Referring now to Figure 4, an enlarged sectional view of the thermistor chip member 24 according to the instant invention is illustrated. The thermistor chip member 24 comprises an interior titania body 58 and an encapsulant coating 60 which completely surrounds and encapsulates the titania element 58. Also illustrated are the interiorly positioned electrical leads 34, 36.

In a second fabrication process, the sintered titania chip is coated with a slurry of the selected ceramic forming material, such as Sauereisen # 8 and including a curing catalyst. The slurry-coated chip is then air dried and cured by firing at elevated temperature approximating the anticipated maximum use temperature for its recommended cure time.

In one form of construction, a pair of lead wires 34, 36 are placed between a pair of sensor element wafers prior to sintering. In another form of construction, a pair of lead wires are impressed into a single wafer prior to sintering.

It will be appreciated that, by using substantially identical starting materials and by adding to the processing a coating step, the electrical response of the sensor chip members to temperature variation will be substantially identical while the responsiveness of the thermistor chip member to variation in oxygen partial pressure will be substantially eliminated. The resulting ceramic thermistor is thus compatible with and suited for operational use with the titania partial pressure of oxygen responsive chip member and will demonstrate a high temperature resistance which is compatible with use in a voltage divider network used to generate an input signal to electronic utilization means designed to operate in accordance with a single set point.

CLAIMS

1. A thermistor comprising a body of ceramic material; two electrical leads embedded in mutually noncontacting relation in said body; said ceramic material having an electrical resistance which varies with temperature and with partial pressure of oxygen at elevated temperatures characterised in that the body of ceramic material is substantially completely encapsulated in a coating of oxygen-impervious material.

2. A thermistor according to Claim 1 characterised in that said ceramic material is titania.

3. A thermistor according to Claim 1 or Claim 2 characterised in that said body has a density of from 72% to 85% of the theoretical density of the ceramic material.

4. A thermistor according to any one of Claims 1 to 3 characterised in that the oxygen impervious material comprises a borosilicate glass.

5. A temperature sensing device for an engine exhaust system comprising a housing adapted to be mounted in the engine exhaust system and a thermistor according to any one of Claims 1 to 4 supported in the housing for location in the exhaust gases passing through the exhaust system.

6. A device according to Claim 5 characterised in that a ceramic insulator having a forwardly-projecting sensor portion and a rearwardly-extending terminal portion is mounted in the housing, the forwardly-projecting sensor portion defining an open cavity within which the thermistor is received, said cavity having a depth sufficient to shield the thermistor from the flow of gaseous combustion products in the exhaust system, and passages extend rearwardly from the cavity within the ceramic insulator to the terminal portion, the electrical leads to the thermistor being received in respective ones of the passages.

7. A method of manufacture of a thermistor comprising the steps of forming a powder of ceramic material having an electrical resistance which varies with temperature and with partial pressure of oxygen; preparing sinterable wafer from said powder; affixing electrodes to said wafers; sintering said wafer and coating said body with an oxygen impervious encapsulant.

0001511

8. A method according to Claim 7 wherein the wafer is sintered to produce a body having a density of from 72% to 85% of the theoretical density of the ceramic material.

FIG. 2.

10

16

47

28a

28

28b

32b

32

52

20

74

42

24

44

44

32a

30b

40

48

46

50

30a

30

42

26

38

36

18

22

14

12

54

37

34

24

36

36

38

40

26

A

FIG. 3.

10

12

16

28

54

32

14

30

18

24

34

36

24

20

26

22

21

58

60

FIG. 1.

FIG. 4.

## DOCUMENTS CONSIDERED TO BE RELEVANT

| Category | Citation of document with indication, where appropriate, of relevant passages | Relevant to claim |
|---|---|---|
| X | <u>FR - A - 2 280 057</u> (FIAT)<br>* Page 2, line 33 to page 3, line 27; page 4, lines 4 to 24; claims 1,3,6,7 *<br>& GB - A - 1 496 265<br><br>--- | 1,2 |
|  | <u>FR - A - 2 115 518</u> (SOURIAU et cie.)<br>* Page 4, lines 28 to 38; claims 1 to 5 *<br><br>--- | 1 |
|  | <u>US - A - 4 001 758</u> (FORD)<br>* Column 5, line 17 to column 11, line 9; figures 3,5,6 *<br><br>-- | 5,6 |
|  | <u>US - A - 4 011 655</u> (FORD)<br>* Column 3, line 53 to column 8, line 22 *<br><br>-- | 5,6 |
|  | <u>US - 3 932 246</u> (FORD)<br>* Claims *<br><br>---- | 7,8 |

### CLASSIFICATION OF THE APPLICATION (Int. Cl.²)

H 01 C   7/04
            7/00
G 01 N 27/12
            27/16

### TECHNICAL FIELDS SEARCHED (Int.Cl.²)

H 01 C   7/04
            7/00
G 01 N 27/12
            27/16
C 04 B 35/46

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20-12-1978 | GORUN |

EPO Form 1503.1   06.78